# EUROPEAN PATENT SPECIFICATION

(11) **EP 2 523 297 B1**
(45) Date of publication and mention of the grant of the patent: **05.03.2014**
(21) Application number: 11305551.1
(22) Date of filing: 09.05.2011
(51) Int. Cl.: H02J 1/04, H04B 3/44

(54) **Power management device for allowing electronic circuits of a submarine equipment to be continuously fed with current**
Leistungsverwaltungsvorrichtung zur Ermöglichung der durchgehenden Versorgung von elektronischen Schaltungen einer Unterwasserausrüstung mit Strom
Dispositif de gestion de l'alimentation pour permettre aux circuits électroniques d'un équipement sous-marin d'être en permanence alimenté par le courant

(43) Date of publication of application: 14.11.2012
(73) Proprietor: Alcatel Lucent, 75007 Paris (FR)
(72) Inventor: Verhaege, Thierry, 91620 NOZAY (FR); Boulon, Rodolphe, 91620 NOZAY (FR)
(74) Representative: Shamsaei Far, Hassan

(56) References cited:
- EP-A1- 1 220 468
- US-A- 5 446 392

## Description

### TECHNICAL DOMAIN

The present invention relates to submarine equipments that are used in submarine (tele)communications.

### BACKGROUND ART

Some submarine equipments, such as branching units, repeaters, active filters, or optical switches, comprise one or more electronic circuits that are mounted in series between first and second pins, between which a main current flows. Some of these electronic circuits offering at least one function that may be requested at any time, need to be fed continuously with current to be capable of maintaining a continuous service and/or immediately carrying out a function that has just been requested.

For instance, a submarine branching unit, which comprises at least three terrestrial terminals (A, B, C) electrically coupled by submarine cables respectively to three terrestrial equipments (E_{A}, E_{B}, E_{C}) and a sea terminal (M) electrically connected to a sea electrode, is intended to couple two of the three terrestrial terminals (for instance A and B) to define a trunk segment between their corresponding terrestrial equipments (for instance E_{A} and E_{B}) and a third one of the three terrestrial terminals (for instance C) with the sea terminal (M) to define a branch segment between the corresponding terrestrial equipment (for instance E_{C}) and the sea electrode. These couplings define a requested configuration that may change at any time. To this effect an electronic circuit of the submarine branching unit comprises a control board that receives the configuration requests and activates one or several relays controlling the couplings in consequence.

US 5446392 discloses a fault locating method and submarine equipment for detecting the location of a fault developed in a communication system including an optical submarine cable and submarine equipment such as repeaters and branching units inserted in the cable, which is supplied with operating current via a feed line of the cable. The submarine equipment has a main processing circuit for transmitting signals via the submarine cable; an power unit inserted in the feed line so as to supply operating power for the main processing circuit by receiving the operating current from the feed line; a nonlinear resistance device which is connected to the feed line and the resistance value of which increases as a current flowing through it decreases, and a charging/discharging resistor disposed in parallel to the nonlinear resistance device. The fault locating method detects the location of an open-circuit fault occurring in the cable by measuring the capacitance of the open-circuit cable. According to this document, the capacitance measurement is quickly and accurately carried out by charging and discharging the cable capacitance through the charging/discharging resistor.

EP 1220468 discloses a submarine branching unit that includes a termination for each of at least three line cables and a termination to sea ground. A relay is positioned between each pair of cable terminations. When current flows between two of the cables, the intermediary relay will become energized and cause a contact to connect the third cable to the sea-ground termination. To avoid dangerous surges in current to sea ground when a relay trips, a current limiter is placed in series with the sea ground termination.

Unfortunately, as it is known by the man skilled in the art the relay activation disturbs, continuously or at least transitorily, the power sources that are available at the different terrestrial and sea terminals (on the input side), which makes difficult ensuring an adequate current feeding of the control board and the relay coils that belong to the electronic circuit and are intended to activate the relays.

To allow the electronic circuit(s) to be fed continuously, it has been proposed to provide the submarine branching unit with two independent but similar electronic circuits, respectively dedicated to the branch and trunk segments. Such a solution is notably described in the patent document US 6,987,902. Unfortunately, the relay activation involves complexity, a significant continuous voltage drop and an associated thermal load, which do not ease addition of new functionalities into the submarine branching unit.

So, some embodiments of the invention aim at allowing a power management of submarine equipments that is intended to render them simpler and/or more reliable and/or subject to lower thermal loads.

An embodiment of the invention comprises a power management device, intended for equipping a submarine equipment comprising at least one electronic circuit mounted in series between first and second pins, between which a main current is intended to flow when in use, and comprising an inductance, mounted in series with the electronic circuit between the first and second pins and arranged for storing energy to maintain a current temporarily when a main current drop occurs, and a free-wheel diode, mounted in parallel with the electronic circuit and inductance between the first and second pins and arranged for allowing the maintained current to loop back toward the electronic circuit in order to maintain a continuous current supply to the electronic circuit.

This power management device may further comprise a voltage limiter mounted in parallel with the inductance to protect it against possible surges. In this case, the power management device may further comprise an auxiliary diode mounted in opposition with the voltage limiter to force the maintained current to flow through the free-wheel diode instead of flowing through this voltage limiter.

Another embodiment of the invention comprises a submarine equipment comprising, on the one hand, at least one electronic circuit mounted in series between first and second pins, between which a main current is intended to flow when in use, and, on the other hand, a power management device such as the one above introduced.

This submarine equipment may include additional characteristics considered separately or combined, and notably:
- it may constitute a branching unit comprising at least three terrestrial terminals configured to be coupled respectively to three terrestrial equipments, a sea terminal configured to be connected to a sea electrode, and one or several relays arranged for selectively coupling two of the three terrestrial terminals to define a trunk segment between their corresponding terrestrial equipments and a third one of three terrestrial terminals with the sea terminal to define a branch segment between the corresponding terrestrial equipment and the sea electrode, depending on command signals;
   ➢ its electronic circuit may comprise electronic components for producing the command signals depending on control signals, and a control board arranged for receiving instructions from at least one of the terrestrial equipments and for producing the control signals depending on these received instructions and/or on instructions generated locally;
      - its electronic circuit may further comprise a voltage limiter mounted in parallel with the control board and arranged for allowing this control board to be fed in current at a chosen constant voltage;
   ➢ its electronic circuit may further comprise groups of electronic components controlling the relays and each comprising a relay coil and a transistor mounted in series, each transistor controlling the current feeding of the associated relay coil depending on the corresponding control signal produced by the control board;
      ● the groups of electronic components may be mounted in parallel with the control board;
      ● its electronic circuit may further comprise a voltage limiter mounted in parallel with the groups of electronic components and arranged for providing a chosen first voltage to be applied to the relay coils when demanded by the control board;
      o its electronic circuit may further comprise an auxiliary transistor mounted in series with the voltage limiter and controlled by a control signal received from the control board, and an auxiliary voltage limiter mounted in parallel with the auxiliary transistor and arranged for increasing (or "boosting") the chosen first voltage when demanded by the control board;
   ➢ its electronic circuit may comprise a voltage limiter in parallel with the control board and a resistor mounted in series with the control board between the latter and the first pin for feeding this control board at a constant voltage that is smaller than the voltage applied to the relay coils;
   ➢ it may comprise at least one other electronic circuit mounted in series between the other electronic circuit and the inductance and comprising, for instance, an optical amplifier mounted in parallel with a voltage limiter arranged for allowing this optical amplifier to be fed at a chosen constant voltage.

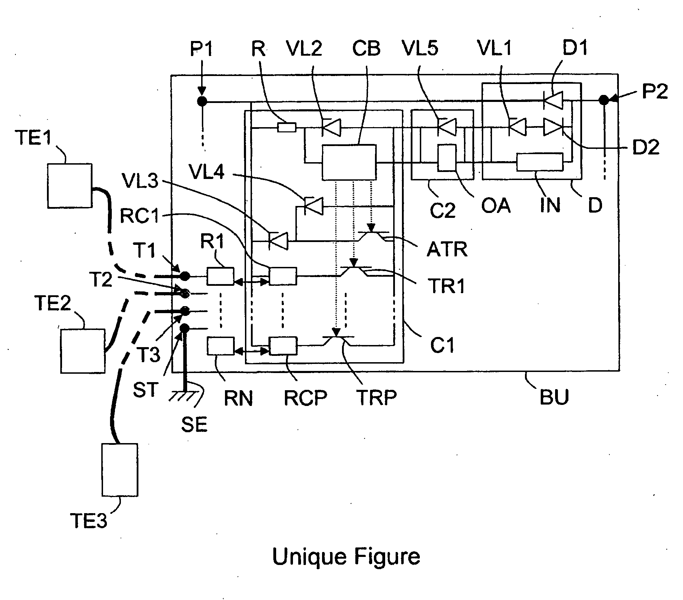

### BRIEF DESCRIPTION OF THE DRAWING

Other features and advantages of the invention will become apparent on examining the detailed specifications hereafter and the appended drawing, wherein the unique figure schematically and functionally illustrates an example of submarine branching unit, coupled to three terrestrial equipments and to a sea electrode, and comprising an example of embodiment of a power management device according to the invention.

The appended drawing may serve not only to complete the invention, but also to contribute to its definition, if need be.

### DETAILED DESCRIPTION

Embodiments of the invention aim at providing submarine equipments BU with a power management device D that may be parts of (tele)communication infrastructures (or systems).

As illustrated in the unique figure, in the following description it will be considered, as example, that the submarine equipment BU is a branching unit. But, the invention concerns any type of submarine equipment comprising at least one electronic circuit Cj that needs to be fed continuously. So, the submarine equipment could be also a repeater, an active filter or an optical switch, for instance.

The example of embodiment of branching unit BU, illustrated in the unique figure, comprises three terrestrial terminals Tk (k = 1 to 3), that are coupled respectively to three terrestrial equipments TEk through cables, and a sea terminal ST, that is connected to a sea electrode SE. It is important to note that a branching unit BU may comprise more than three terrestrial terminals Tk (for instance four or five), and/or more than one sea terminal ST (for instance two or three). It is also important to note that a submarine equipment that is concerned by the invention may comprise one terrestrial terminal Tk, coupled to a terrestrial equipment TEk through a cable, and a sea terminal ST, connected to a submarine cable, or two sea terminals, connected respectively to two submarine cables.

The terrestrial terminals Tk and the sea terminal ST may be electrically coupled two by two by means of relay(s) Rn (n = 1 to N, with N ≥ 1), which are controlled by means of at least one electronic circuit Cj (here only one (C1, j = 1)). It is important to note that the number N of relays Rn may be greater than the number of terminals Tk and ST, notably when the branching unit BU offers a functionality of the type "make-before-break", which allows to establish new connections before closing old ones.

As illustrated, the branching unit BU may comprise one or more other electronic circuits Cj' (j' ≠1) intended to implement at least one function. In the non limiting example of embodiment, the branching unit BU comprises a second electronic circuit C2 mounted in series between the first electronic circuit C1 and the inductance IN. For instance, when the branching unit BU also acts as a repeater, the second electronic circuit C2 may comprise an optical amplifier OA that may be mounted in parallel with a voltage limiter VL5 to be fed in current at a chosen constant voltage. This second electronic circuit C2 may also comprise a modulator intended for modulating the optical power to transmit information to at least one of the terrestrial equipments TEk. It is important to note that a second electronic circuit C2 may offer other functionalities than an optical amplification and/or an optical modulation. Indeed, it may be of any type as long as it requires a continuous feeding.

These electronic circuits Cj (here j = 1 and 2) are mounted in series between first P1 and second P2 pins. These first P1 and second P2 pins may be connected each to one amongst the terminals T1, T2, T3 and ST, depending on the configuration imposed by the relays (during reconfigurations, they could also be open-circuited, or connected to more than one terminal). A main current flows between the first P1 and second P2 pins in order for the electronic circuits Cj to be fed continuously once a requested terminal configuration has been defined under control of the first electronic circuit C1.

The branching unit BU further comprises a power management device D that is intended to provide the electronic circuits Cj with a transient current during each reconfiguration of the connections between terminals Tk and ST, so that they could be really fed continuously.

This (power management) device D comprises at least an inductance IN and a free-wheel diode D1.

The inductance IN is mounted in series with the electronic circuits Cj between pins P1 and P2. It is arranged for storing energy when it is fed with the main current (i.e. once a requested terminal configuration has been defined), in order to be capable of maintaining a current temporarily (i.e. producing a transient current) when a drop (down) of this main current occurs (for example during a terminal reconfiguration).

The free-wheel diode D1 is mounted in parallel with the electronic circuits Cj and inductance IN, between the first P1 and second P2 pins. It is arranged for allowing the maintained (or transient) current (produced by the inductance IN) to loop back toward the electronic circuits Cj so that they could be fed continuously.

So, when the main current (between the first P1 and second P2 pins) drops down or vanishes, the inductance IN produces a maintained (or transient) current that is looped back with the aid of a free-wheel diode D1 to maintain for a while a current through the electronic circuits Cj.

As illustrated in the unique figure, the device D may further comprise a voltage limiter VL1 mounted in parallel with the inductance IN to protect the latter against possible surges. For instance, this voltage limiter VL1 may be a Zener diode.

In the case where the device D comprises such a voltage limiter VL1, it advantageously also comprises an auxiliary diode D2 mounted in opposition with this voltage limiter VL1 in order to force the maintained (or transient) current to flow through the free-wheel diode D1 instead of flowing through this voltage limiter VL1, when the inductance IN maintains a feeding current for the electronic circuits Cj (here during a terminal reconfiguration).

When the first electronic circuit C1 is intended for controlling the interconnections between terminals Tk and ST, as illustrated, it comprises at least electronic components (RCp, TRp) and a control board CB.

The control board CB is arranged for receiving instructions from at least one of the terrestrial equipments TEk and for producing control signals depending on these received instructions or on instructions locally generated. These control signals are intended for controlling indirectly the relays Rn to define a requested configuration.

The first electronic circuit Cj may comprise a voltage limiter VL2 mounted in parallel with the control board CB and arranged for allowing this control board CB to be fed at a chosen constant voltage. For instance, this voltage limiter VL2 may be a Zener diode.

Depending on the targeted configuration, the control board CB switches on (or alternatively off) the transistors TRp that allow to power (or alternatively depower) the relay coils RCp.

As illustrated, the electronic components (RCp, TRp) may be grouped into groups that are each associated to one or several relays Rn, comprises a relay coil RCp and a transistor TRp that are mounted in series. Each transistor TRp of a group controls the state of the associated relay coil RCp depending on the corresponding control signal produced by the control board CB. These transistors TRp may be of the MOSFET type, for instance. In this case, when the gate potential is equal to the source potential, the gate-source circuit is "open" and the relay coil RCp is not fed, and when the control board CB applies a low voltage (typically several Volts) between the gate and the source, the drain-source circuit is "closed" and the relay coil RCp is fed.

Generally, the relay coils RCp need only to be fed for short periods of time (typically 10 ms or so), in order to change a configuration (through latching relays Rn (that are each controlled by two relay coils)), or to allow a transient configuration (typically during a make-before-break phase). So, it is possible to sequentialize the relay coils activation, or at least to limit the number of coils RCp to be fed at the same time, to prevent current insufficiency. Therefore, the transistors TRp are generally switched off, but switched on for short periods (during each reconfiguration) under control of the control board CB.

Preferably these groups of electronic components (RCp, TRp) are mounted in parallel with the control board CB, so that the control is simplified (due to the sharing of the same source potential reference) and the global voltage drop is minimum. However, the current and voltage required for the control board CB being usually lower than those required for relay coils activation, it is preferable that the first electronic circuit C1 comprises a resistor R mounted in series with its control board CB, between the latter (CB) and the first pin P1. The resistance value of this resistor R is chosen so that the current through it exceeds the current that is required by the control board CB, but remains small compared to the main current. In other words, this resistor R allows the control board CB to be fed with a current and voltage that are smaller than the current and voltage needed by the relay coils RCp.

Moreover, and as illustrated, the first electronic circuit C1 may comprise advantageously a voltage limiter VL3 mounted in parallel with the groups of electronic components (RCp, TRp) and arranged for providing a chosen first voltage V1 which is intended to be applied to a relay coil RCp during a terminal reconfiguration (i.e. when demanded by the control board CB). For instance, this voltage limiter VL3 may be a Zener diode.

When necessary, it is possible to boost (or increase) the chosen first voltage V1 to be applied to a relay coil RCp in order for the latter to be efficient and/or work rapidely. For this purpose, and as illustrated, the first electronic circuit C1 may further comprise an auxiliary transistor ATR mounted in series with the voltage limiter VL3 and controlled by a control signal received from the control board CB, and an auxiliary voltage limiter VL4 mounted in parallel with this auxiliary transistor ATR and arranged for increasing (or boosting) the first voltage V1 when demanded by the control board CB. The voltage limiter VL3 is continuously fed while the auxiliary voltage limiter VL4 is only fed transitorily. This auxiliary voltage limiter VL4 is a small equipment which does not induce losses in permanent running.

The auxiliary transistor ATR is generally switched on, but switched off when a voltage boost is required. In this case, the voltage available for coil feeding is the sum of the first voltage V1 and the auxiliary voltage provided by the auxiliary voltage limiter VL4. As being currently by-passed, the auxiliary voltage limiter VL4 does not increase the branching unit's voltage drop and thermal load. For instance, this auxiliary voltage limiter VL4 may be a Zener diode.

The invention is not limited to the embodiments of power management device and submarine equipment described above, only as examples, but it encompasses all alternative embodiments which may be considered by one skilled in the art within the scope of the claims hereafter.

## Claims

1. Power management device (D) for a submarine equipment (BU) comprising at least one electronic circuit (Cj) mounted in series between first (P1) and second (P2) pins, between which a main current is intended to flow when in use, wherein it comprises an inductance (IN) mounted in series with said electronic circuit (Cj) between said first (P1) and second (P2) pins **characterized in that** said inductance is arranged for storing energy to maintain a current temporarily when a main current drop occurs, and a free-wheel diode (D1) mounted in parallel with said electronic circuit (Cj) and said inductance (IN) between said first (P1) and second (P2) pins is arranged for allowing said maintained current to loop back toward said electronic circuit (Cj) in order two maintain a continuous current supply to said electronic circuit (Cj).

2. Power management device according to claim 1, wherein it comprises a voltage limiter (VL1) mounted in parallel with said inductance (IN) to protect it against possible surges.

3. Power management device according to claim 2, wherein it comprises an auxiliary diode (D2) mounted in opposition with said voltage limiter (VL1) to force said maintained current to flow through said free-wheel diode (D1) instead of flowing through said voltage limiter (VL1).

4. Submarine equipment (BU) comprising at least one electronic circuit (Cj) mounted in series between first (P1) and second (P2) pins, between which a main current is intended to flow when in use, wherein it further comprises a power management device (D) according to one of the preceding claims.

5. Submarine equipment according to claim 4, wherein it constitutes a branching unit comprising at least three terrestrial terminals (Tk) configured to be coupled respectively to three terrestrial equipments (TEk), a sea terminal (ST) configured to be connected to a sea electrode (SE), and at least one relay (Rn) arranged for selectively coupling two of said three terrestrial terminals (Tk) to define a trunk segment between their corresponding terrestrial equipments (TEk) and a third one of said three terrestrial terminals (Tk) with said sea terminal (ST) to define a branch segment between the corresponding terrestrial equipment (TEk) and said sea electrode (SE), depending on command signals.

6. Submarine equipment according to claim 5, wherein said electronic circuit, (Cj) comprises electronic components arranged for producing said command signals depending on control signals, and a control board (CB) arranged for receiving instructions from at least one of said terrestrial equipments (TEk) and for producing said control signals depending on said received instructions and/or on instructions generated locally.

7. Submarine equipment according to claim 6, wherein said electronic circuit (Cj) comprises a voltage limiter (VL2) mounted in parallel with said control board (CB) and arranged for allowing said control board (CB) to be fed in current at a chosen constant voltage.

8. Submarine equipment according to any one of claims 6 and 7, wherein said electronic circuit (Cj) comprises groups of electronic components (RCp, TRp) controlling said relays (Rn) and each comprising a relay coil (RCp) and a transistor (TRp) mounted in series, each transistor (TRp) controlling the current feeding of the associated relay coil (RCp) depending on the corresponding control signal produced by said control board (CB).

9. Submarine equipment according to claim 8, wherein said groups of electronic components (RCp, TRp) are mounted in parallel with said control board (CB).

10. Submarine equipment according to claim 9, wherein said electronic circuit (Cj) comprises a voltage limiter (VL3) mounted in parallel with said groups of electronic components (RCp, TRp) and arranged for providing a chosen first voltage to be applied to said relay coils (RCp) when demanded by the control board.

11. Submarine equipment according to claim 10, wherein said electronic circuit (Cj) comprises an auxiliary transistor (ATR) mounted in series with said voltage limiter (VL3) and controlled by a control signal received from said control board (CB), and an auxiliary voltage limiter (VL4) mounted in parallel with said auxiliary transistor (ATR) and arranged for increasing said chosen first voltage when demanded by the control board.

12. Submarine equipment according to any one of claims 5 to 11, wherein said electronic circuit (Cj) comprises a resistor (R) mounted in series with said control board (CB) between the latter (CB) and said first pin (P1) for feeding said control board (CB) at a constant voltage that is smaller than the voltage applied to said relay coils (RCp).

13. Submarine equipment according to any one of claims 5 to 12, wherein it comprises at least one other electronic circuit (Cj') mounted in series between said electronic circuit (Cj) and said inductance (IN) and comprising an optical amplifier (OA) mounted in parallel with a voltage limiter (VL5) arranged for allowing said optical amplifier (OA) to be fed in current at a chosen constant voltage.

## Patentansprüche

1. Leistungsverwaltungsvorrichtung (D) für eine Untersee-Einrichtung (BU) mit mindestens einer zwischen einem ersten (P1) und einem zweiten (P2) Kontaktstift, zwischen denen bei Betrieb Strom fließen soll, in Reihe angeordneten elektronischen Schaltung (Cj), wobei die Vorrichtung eine mit der besagten elektronischen Schaltung (Cj) zwischen dem besagten ersten (P1) und dem besagten zweiten (P2) Kontaktstift in Reihe angeordnete Induktivität (IN) umfasst, **dadurch gekennzeichnet, dass** die Induktivität für die Speicherung von Energie ausgelegt ist, um einen Strom vorübergehend aufrechtzuerhalten, wenn ein Hauptstromabfall eintritt und einer Freilaufdiode (D1), welche parallel mit der besagten elektronischen Schaltung (Cj) und der besagten Induktivität (IN) zwischen dem besagten ersten (P1) und dem besagten zweiten (P2) Kontaktstift angeordnet und dazu ausgelegt ist, den Rücklauf des besagten aufrechterhaltenen Stroms zu der besagten elektronischen Schaltung (Cj) zu ermöglichen, um eine kontinuierliche Stromversorgung der elektronischen Schaltung (Cj) zu gewährleisten.

2. Leistungsverwaltungsvorrichtung nach Anspruch 1, umfassend einen parallel zu der besagten Induktivität (IN) angeordneten Spannungsbegrenzer (VL1) für deren Schutz gegen mögliche Stromstöße.

3. Leistungsverwaltungsvorrichtung nach Anspruch 2, umfassend eine zu dem besagten Spannungsbegrenzer (VL1) entgegengesetzt angeordnete Hilfsdiode (D2), um den besagten aufrechterhaltenen Strom zu zwingen, durch die besagte Freilaufdiode (D1) anstatt durch den besagten Spannungsbegrenzer (VL1) zu fließen.

4. Untersee-Einrichtung (BU), umfassend mindestens eine elektronische Schaltung (Cj), welche zwischen dem ersten (P1) und dem zweiten (P2) Kontaktstift, zwischen denen bei Betrieb ein Hauptstrom fließen soll, in Reihe angeordnet ist, wobei sie weiterhin eine Leistungsverwaltungsvorrichtung (D) nach einem der vorstehenden Ansprüche umfasst.

5. Untersee-Einrichtung nach Anspruch 4, wobei sie eine Verzweigungseinheit mit mindestens drei terrestrischen Terminals (Tk), die für das jeweilige Koppeln an drei terrestrische Einrichtungen (TEk) konfiguriert sind, einem See-Terminal (ST), welcher für den Anschluss an eine See-Elektrode (SE) konfiguriert ist, und mindestens einem Relais (Rn), welches für das selektive Koppeln von zwei der drei terrestrischen Terminals (Tk) ausgelegt ist, um ein Stammsegment zwischen deren entsprechenden terrestrischen Einrichtungen (TEk) zu definieren, und von einem dritten der drei terrestrischen Terminals (Tk) mit dem besagten See-Terminal (ST), um ein Verzweigungssegment zwischen der entsprechenden terrestrischen Einrichtung (TEk) und der besagten See-Elektrode (SE), in Abhängigkeit von Kommandosignalen, zu definieren, bildet.

6. Untersee-Einrichtung nach Anspruch 5, wobei die besagte elektronische Schaltung (Cj) elektronische Komponenten, welche für die Erzeugung der besagten Kommandosignale in Abhängigkeit von Steuersignalen ausgelegt sind, und eine Steuerplatine (CB), welche für den Empfang von Anweisungen von mindestens einer der besagten terrestrischen Einrichtungen (TEk) und für die Erzeugung der besagten Steuersignale in Abhängigkeit von den besagten empfangenen Anweisungen und/oder von lokal erzeugten Anweisungen ausgelegt ist, umfasst.

7. Untersee-Einrichtung nach Anspruch 6, wobei die besagte elektronische Schaltung (Cj) einen Spannungsbegrenzer (VL2) umfasst, welcher parallel zu der besagten Steuerplatine (CB) angeordnet und dazu ausgelegt ist, die Stromversorgung der besagten Steuerplatine (CB) bei einer ausgewählten konstanten Spannung zu ermöglichen.

8. Untersee-Einrichtung nach einem beliebigen der Ansprüche 6 und 7, wobei die besagte elektronische Schaltung (Cj) Gruppen von elektronischen Komponenten (RCp, TRp) umfasst, welche die besagten Relais (Rn) steuern und jeweils eine Relaisspule (RCp) und einen Transistor (TRp) umfassen, welche in Reihe angeordnet sind, wobei jeder Transistor (TRp) die Stromversorgung der assoziierten Relaisspule (RCp) in Abhängigkeit von dem entsprechenden von der besagten Steuerplatine (CB) erzeugten Steuersignal steuert.

9. Untersee-Einrichtung nach Anspruch 8, wobei die besagten Gruppen von elektronischen Komponenten (RCp, TRp) parallel zu der besagten Steuerplatine (CB) angeordnet sind.

10. Untersee-Einrichtung nach Anspruch 9, wobei die besagte elektronische Schaltung (Cj) einen Spannungsbegrenzer (VL3) umfasst, welcher parallel zu den besagten Gruppen von elektronischen Komponenten (RCp, TRp) angeordnet und dazu ausgelegt ist, zu gewährleisten, dass an den besagten Relaisspulen (RCp) bei Anforderung durch die Steuerplatine eine ausgewählte erste Spannung angelegt wird.

11. Untersee-Einrichtung nach Anspruch 10, wobei die besagte elektronische Schaltung (Cj) einen Hilfstransistor (ATR), welcher mit dem besagten Spannungsbegrenzer (VL3) in Reihe angeordnet ist und von einem von der besagten Steuerplatine (CB) empfangenen Steuersignal gesteuert wird, und einen Hilfsspannungsbegrenzer (VL4), welcher parallel zu dem besagten Transistor (ATR) angeordnet und dazu ausgelegt ist, die besagte ausgewählte erste Spannung bei Anforderung durch die Steuerplatine zu erhöhen, umfasst.

12. Untersee-Einrichtung nach einem beliebigen der Ansprüche 5 bis 11, wobei die besagte elektronische Schaltung (Cj) einen Widerstand (R), welcher zwischen der besagten Steuerplatine (CB) und dem besagten ersten Kontaktstift (P1) mit der besagten Steuerplatine (CB) in Reihe angeordnet ist, umfasst, um die besagte Steuerplatine (CB) bei einer konstanten Spannung, welche kleiner ist als die an die besagten Relaisspulen (RCp) angelegte Spannung, zu versorgen.

13. Untersee-Einrichtung nach einem beliebigen der Ansprüche 5 bis 12, umfassend mindestens eine weitere elektronische Schaltung (Cj'), welche zwischen der besagten elektronischen Schaltung (Cj) und der besagten Induktivität (IN) in Reihe angeordnet ist und einen optischen Verstärker (OA) umfasst, welcher parallel zu einem Spannungsbegrenzer (VL5) angeordnet ist, um die Stromversorgung des besagten optischen Verstärkers (OA) bei einer ausgewählten konstanten Spannung zu ermöglichen.

## Revendications

1. Dispositif de gestion d'énergie (D) pour un équipement sous-marin (BU), comprenant au moins un circuit électronique (Cj) monté en série entre une première (P1) et une deuxième (P2) broches entre lesquelles est destiné à circuler un courant lors de l'utilisation, celui-ci comprenant une inductance (IN) montée en série avec ledit circuit électronique (Cj) entre ladite première (P1) et ladite deuxième (P2) broches, **caractérisé en ce que** ladite inductance est conçue pour stocker de l'énergie afin de maintenir temporairement un courant lorsqu'il se produit une chute du courant principal, et une diode de roue libre (D1) montée en parallèle avec ledit circuit électronique (Cj) et ladite inductance (IN) entre ladite première (P1) et ladite deuxième (P2) broches est conçue pour permettre audit courant maintenu d'être renvoyé vers ledit circuit électronique (Cj) afin de maintenir une alimentation électrique continue dudit circuit électronique (Cj).

2. Dispositif de gestion d'énergie selon la revendication 1, celui-ci comprenant un limiteur de tension (VL1) monté en parallèle avec ladite inductance (IN) pour la protéger contre les surcharges possibles.

3. Dispositif de gestion d'énergie selon la revendication 2, celui-ci comprenant une diode auxiliaire (D2) montée en opposition avec ledit limiteur de tension (VL1) pour forcer ledit courant maintenu à circuler à travers ladite diode de roue libre (D1) au lieu de circuler à travers ledit limiteur de tension (VL1).

4. Équipement sous-marin (BU), comprenant au moins un circuit électronique (Cj) monté en série entre une première (P1) et une deuxième (P2) broches entre lesquelles est destiné à circuler un courant lors de l'utilisation, celui-ci comprenant en outre un dispositif de gestion d'énergie selon l'une des revendications précédentes.

5. Équipement sous-marin selon la revendication 4, celui-ci constituant une unité de raccordement comprenant au moins trois terminaux terrestres (Tk) configurés pour être respectivement connectés à trois équipements terrestres (TEk), un terminal maritime (ST) configuré pour être connecté à une électrode maritime (SE) et au moins un relais (Rn) conçu pour connecter de manière sélective deux desdits trois terminaux terrestres (Tk) afin de définir un segment de circuit entre leurs équipements terrestres (TEk) correspondants et un troisième desdits trois terminaux terrestres (Tk), ledit terminal maritime (ST) définissant un segment de raccordement entre l'équipement terrestre (TEk) correspondant et ladite électrode maritime (SE), en fonction de signaux de commande.

6. Équipement sous-marin selon la revendication 5, dans lequel ledit circuit électronique (Cj) comprend des composants électroniques conçus pour produire lesdits signaux de commande en fonction de signaux de régulation, et une carte de régulation (CB) conçue pour recevoir des instructions de la part d'au moins l'un desdits équipements terrestres (TEk) et pour produire lesdits signaux de régulation en fonction desdites instructions reçues et/ou d'instruction générées localement.

7. Équipement sous-marin selon la revendication 6, dans lequel ledit circuit électronique (Cj) comprend un limiteur de tension (VL2) monté en parallèle avec ladite carte de régulation (CB) et conçu pour permettre à ladite carte de régulation (CB) d'être alimentée électriquement à une tension constante choisie.

8. Équipement sous-marin selon l'une quelconque des revendications 6 et 7, dans lequel ledit circuit électronique (Cj) comprend des groupes de composants électroniques (RCp, TRp) qui commandent lesdits relais (Rn) et comprenant chacun une bobine de relais (RCp) et un transistor (TRp) montés en série, chaque transistor (TRp) régulant l'alimentation électrique de la bobine de relais (RCp) associée en fonction du signal de régulation correspondant produit par ladite carte de régulation (CB).

9. Équipement sous-marin selon la revendication 8, dans lequel lesdits groupes de composants électroniques (RCp, TRp) sont montés en parallèle avec ladite carte de régulation (CB).

10. Équipement sous-marin selon la revendication 9, dans lequel ledit circuit électronique (Cj) comprend un limiteur de tension (VL3) monté en parallèle avec lesdits groupes de composants électroniques (RCp, TRp) et conçu pour produire une première tension choisie à appliquer auxdites bobines de relais (RCp) lorsque la carte de régulation le demande.

11. Équipement sous-marin selon la revendication 10, dans lequel ledit circuit électronique (Cj) comprend un transistor auxiliaire (ATR) monté en série avec ledit limiteur de tension (VL3) et commandé par un signal de régulation reçu de la part de ladite carte de régulation (CB), et un limiteur de tension auxiliaire (VL4) monté en parallèle avec ledit transistor auxiliaire (ATR) et conçu pour augmenter ladite première tension choisie lorsque la carte de régulation le demande.

12. Équipement sous-marin selon l'une quelconque des revendications 5 à 11, dans lequel ledit circuit électronique (Cj) comprend une résistance (R) montée en série avec ladite carte de régulation (CB) entre cette dernière (CB) et ladite première broche (P1) pour alimenter ladite carte de régulation (CB) à une tension constante qui est inférieure à la tension appliquée auxdites bobines de relais (RCp).

13. Équipement sous-marin selon l'une quelconque des revendications 5 à 12, celui-ci comprenant au moins un autre circuit électronique (Cj') monté en série entre ledit circuit électronique (Cj) et ladite inductance (IN) et comprenant un amplificateur optique (OA) monté en parallèle avec un limiteur de tension (VK5) conçu pour permettre audit amplificateur optique (OA) d'être alimenté électriquement à une tension constante choisie.
